Europäisches Patentamt

European Patent Office

Office européen des brevets

(19)

(11) Veröffentlichungsnummer: **0 228 569 B1**

(12) **EUROPÄISCHE PATENTSCHRIFT**

(45) Veröffentlichungstag der Patentschrift: 15.05.91

(51) Int. Cl.5: **F24D 3/00**

(21) Anmeldenummer: 86116348.3

(22) Anmeldetag: 25.11.86

(54) **Anordnung zur Wärmerückgewinnung und zum Reinigen von Rauchgasen.**

(30) Priorität: 05.12.85 DE 3543051

(43) Veröffentlichungstag der Anmeldung:
15.07.87 Patentblatt 87/29

(45) Bekanntmachung des Hinweises auf die
Patenterteilung:
15.05.91 Patentblatt 91/20

(84) Benannte Vertragsstaaten:
AT BE CH FR GB LI NL SE

(56) Entgegenhaltungen:
DE-A- 3 005 880
DE-A- 3 139 794
DE-A- 3 340 109
US-A- 4 031 862

PATENTS ABSTRACTS OF JAPAN, Band 8,
Nr. 43 (M-279)[1480], 24. Februar 1984; & JP-
A-58 198 636 (MATSUSHITA DENKI SANGYO
K.K.) 18-11-1983

(73) Patentinhaber: **SCHOTT RUHRGLAS GMBH**
**Postfach 1180**
**W-8596 Mitterteich(DE)**

(72) Erfinder: **Männl, Reinhard, Dipl.-Ing.**
**Kohlloh-Strasse 41**
**W-8596 Mitterteich(DE)**

(74) Vertreter: **Dr. Fuchs, Dr. Luderschmidt**
**Dipl.-Phys. Seids, Dr. Mehler Patentanwälte**
**Abraham-Lincoln-Strasse 7**
**W-6200 Wiesbaden(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

## Beschreibung

Anordnung zur Wärmerückgewinnung und zum Reinigen von Rauchgasen

Die Erfindung betrifft eine Anordnung zur Wärmerückgewinnung und zum Reinigen von Rauchgasen, die zwischen einer Heizanlage, wie z.B. einen Öl-, Gas- oder Festbrennstoff- Heizkessel, und dem Kamin angeordnet ist, nach dem Oberbegriff des Anspruchs 1.

In den letzten Jahren wurden verstärkte Anstrengungen unternommen, um einerseits den Wirkungsgrad der Heizkessel zu erhöhen und um andererseits die Umweltbelastung durch die Rauchgase zu verringern.

Zur Senkung des Energieverbrauchs wurden die sogenannten Niedertemperatur- und Tieftemperaturkessel sowie die sogenannten Brennwertkessel entwickelt.

Während früher bei den herkömmlichen Heizkesseln am Kesselende Temperaturen um 200°C üblich waren, werden heute Temperaturen bis unter 100°C erzielt. Dies wird bei den Brennwertkesseln dadurch erreicht, daß neben der Heizenergie im Brennstoff auch die Verdampfungsenergie in der Verbrennungsluft genutzt wird. Solche Kessel können nur voll genutzt werden, wenn die Rücklauftemperatur der Heizungsanlage unter der Wassertaupunkttemperatur der Rauchgase liegt.

Das sind bei Gas 50 bis 60°C und bei Öl 40 bis 55°C. Der Einsatzbereich beschränkt sich damit auf die Niedertemperaturheizung und ist für die heute vorwiegend im Einsatz befindliche Heizung (90/70°C) ungeeignet. Niedertemperaturheizung bedeutet aber höhere Kosten beim Bau, da eine größere Heizfläche erforderlich ist (rund 40 %).

Ein weiterer Nachteil besteht darin, daß konventionelle Schornsteine von Brennwertanlagen wegen des hohen Wasser-und Dampfanfalls und der erhöhten Dichtigkeitsanforderungen ungeeignet sind.

Wenn die Wasserdampftaupunkttemperatur innerhalb des Schornsteins unterschritten wird, fällt Kondensat aus und könnte zu Versottungen führen. Die Menge des Kondensats hängt vor allem vom Wärmeverlust des Schornsteins und von der Schornsteindimensionierung ab. Ein- und zweischalige Schornsteine genügen keinesfalls mehr den Anforderungen moderner Heizkessel. Es gibt jedoch bereits entsprechende Schornsteinkonstruktionen, die feuchtigkeitsunempfindlich sind, zum Beispiel dreischalige Schornsteine mit Hinterlüftung oder Entwicklung mit innenglasierten Futterrohren.

Es sind auch bereits säurebeständige Schornsteinauskleidungen aus Glas vorgeschlagen worden (DE-OS 33 40 109).

Soweit die Brennwertanlagen mit Überdruck (Abgasventilator) auf der Abgasseite betrieben werden, sind wegen der Gefahr des Abgasaustritts und des Transports der Restfeuchte in den Abgasen dichte metallische Rohre aus Edelstahl oder bestimmte Aluminiumlegierungen, mit und ohne Beschichtung dann verwendbar, wenn diese Rohrleitungen in feuerbeständigen Schächten (die feuerbeständigen Schächte sind häufig konventionelle alte Schornsteine) installiert werden und der Zwischenraum zwischen Abgasleitung und Schacht belüftet ist. Die Belüftung dient als Sicherheit bei evtl. Undichtigkeiten.

Die Kondensatentsorgung am Fuße ist bei diesen "nassen" Abgasleitungen ebenfalls problematisch, weil nur bis 50 kW Feuerungsleistung eine uneingeschränkte Ableitung in das städtische Abwassernetz gestattet ist.

Zusammenfassend muß festgestellt werden, daß die Energieeinsparungen, die mit Brennwertkesseln möglich sind, nur erzielt werden, wenn

1. ein um 6000 bis 8000 DM teurerer Kessel eingesetzt wird,

2. ein reparaturanfälliger Rauchgasventilator in Betrieb gehalten wird.

3. ein mit Edelstahl oder Glas ausgekleideter Schornstein errichtet und im permanenten Kondensatprozeß mit Korrosionserscheinungen betreiben wird,

4. das Abwasserproblem durch saures und damit in jedem Falle gefährliches Kondensat gelöst wird,

5. durch den Betrieb unterhalb des Taupunktes in Kessel und Schornstein eine erheblich kürzere Lebenserwartung dieser Anlagen in Kauf genommen wird.

Das Abwasser- und Korrosionsproblem kann mit einer Sprüh-Neutralisationsanlage, wie sie in der DE 31 39 794 A 1 beschrieben ist, überwunden werden. Bei dieser Anlage ist zwischen dem Rauchgasausgang des Heizkessels und einem nachgeschalteten Rohrbündel-Wärmetauscher ein Neutralisationsbad vorgesehen, wobei die Neutralisationsflüssigkeit mittels einer Umwälzpumpe in dem Rauchgasausgang des Heizkessels und in die Wärmetauscherrohre eingesprüht wird. Die verbleibenden Abgase werden mittels eines Rauchgasventilators abgezogen. Die Verwendung von bewegten Teilen in der Abgasanlage macht die gesamte Anlage jedoch anfällig für Störungen, bei denen dann entweder die Neutralisation ausfällt, so daß das gesamte Kaminsystem durch die damit verbundene Erhöhung des Sulfat- und Sulfitanteils im Rauchgas einer verstärkten Korrosion unterliegt, oder der gesamte Zug des Kamins durch Ausfall des Rauchgasventilators zusammenbricht. Die Verwendung eines flüssigen Neutralisationsmittels hat außerdem den Nachteil, daß dessen pH bis zum völligen Austausch der Flüssigkeit immer mehr sinkt, so daß die Neutralisationsleistung immer mehr nachläßt und im nachfolgenden Kaminsystem wiederum erhöhte Korrosionserscheinungen auftreten können. Eine im wesentlichen konstante Abpufferung des Kondensats ist durch die ständige Verwendung der gesamten Neutralisatormenge nicht möglich.

Aufgabe der Erfindung ist daher eine Anordnung für alle auf dem Markt erhältlichen Heizkessel sowie insbesondere für Altanlagen, mit der, ohne den Heizkessel zu verändern und ohne das Abwasser zu belasten, sowie ohne teure Umbauarbeiten am Schornstein vornehmen zu müssen, eine Energieeinsparung und eine Reinigung der Rauchgase möglich ist.

Diese Aufgabe wird bei einer gattungsgemäßen Einrichtung durch die Kennzeichnenden Merkmale des Anspruchs 1 gelöst.

Wesentlich bei dieser Anordnung ist der an den Rauchgasausgang der Heizanlage anschließbare Wärmetauscher, welcher das Rauchgas bis unter den Kondensationspunkt kühlt, in Kombination mit einem, dem Wärmetauscher nachgeschalteten Neutralisator, sowie vorzugsweise mit einem Schornstein, bzw. einer Schornsteinauskleidung aus Glas.

In der DF-OS 30 21 572 ist bereits vorgeschlagen worden, dem Heizkessel einen Wärmetauscher aus nichtrostendem Stahl nachzuschalten und den Kamin mit einem Rohr aus nichtrostendem Stahl auszukleiden. Es hat sich jedoch herausgestellt, daß Edelstahlbauteile gegenüber dem anfallenden, schwefelsäurehaltigen Kondensat nicht ausreichend resistent sind.

Gegen die Verwendung von Glas im Wärmetauscher bestanden bisher erhebliche Vorurteile: Glas ist ein zerbrechlicher Werkstoff. Der Wärmeübergang durch die Glasrohrwandung ist bekanntlich schlecht. Die Abdichtung von Glasröhren im Rohrboden ist problematisch. Entsprechend beschreibt die DE 31 39 794 A1 eine sehr aufwendige und damit wieder störanfällige, teure Befestigung von Glasrohren, die auf Grund ihrer Abmessungen und ihres Preises weder für bestehende Altanlagen, noch für kleine Neuanlagen in Frage kommt.

Es wurde nun überraschend gefunden, daß ein Wärmetauscher mit einem Rohrbündel von Glasrohren aus säurefestem Glas alle bisherigen Probleme löst, wenn - im Gegensatz zur üblichen Wärmetauscherpraxis - das zu kühlende Rauchgas durch die Rohre und das Kühlmedium um diese Rohre herum geleitet wird und das austehende Kondensat durch die Rohre in Richtung des Kamins fließt und vor dem Kamin in einen Neutralisator abläuft. Dabei ergibt sich eine einfache Konstruktion und eine geringe Bauhöhe, insbesondere dann, wenn der Außenmantel des Wärmetauschers aus Stahlblech besteht.

Die erfindungsgemäße Anordnung bietet den Vorteil, daß
- keine neuen, teuren Spezialheizkessel für Kondensationsbetrieb nötig sind und
- die Brennereinstellung wesentlich vereinfacht wird. Es muß nur noch ein günstiges Rußbild eingestellt werden. Der $CO_2$-Gehalt im Rauchgas spielt eine untergeordnete Rolle, da die Energie der überschüssigen, erwärmten Verbrennungsluft im Wärmetauscher wieder zurückgewonnen wird.

Die Erfindung wird anhand einer beispielhaften Ausführungsform unter Hinweis auf die Zeichnung näher erläutert, in welcher:

Figur 1    eine schematische Darstellung einer Anlage gemäß der Erfindung und

Figur 2    ein Schnitt durch eine Rohrverbindung des/der Kamins/Kaminauskleidung gemäß der Erfindung ist.

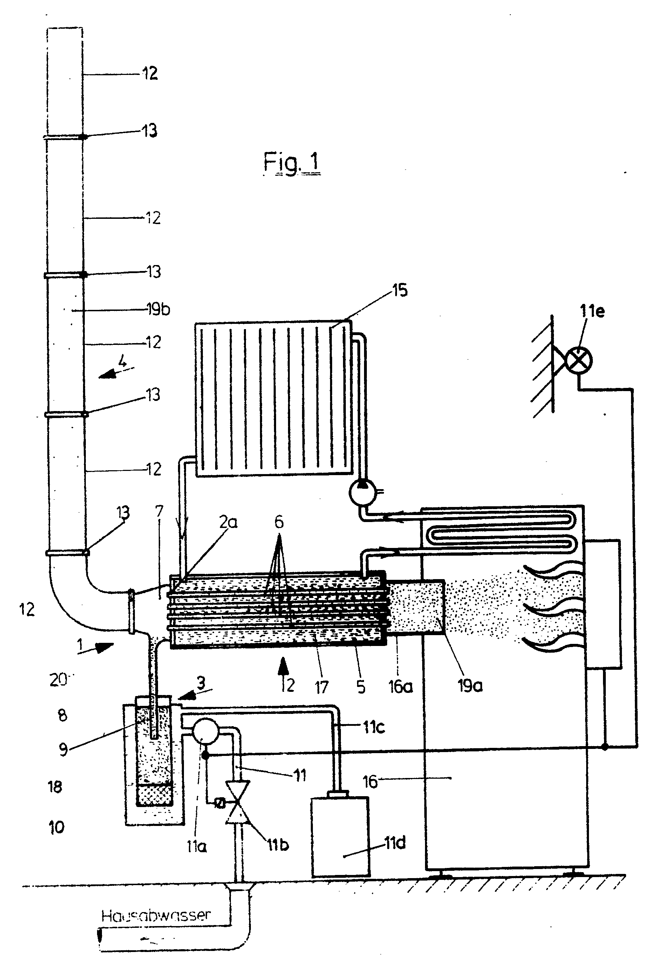

In der Figur 1 ist die gesamte erfindungsgemäße Anordnung 1, bestehend aus Wärmetauscher 2, Neutralisator 3 und Kamin/Kaminauskleidung 4 dargestellt. Die im Heizkessel 16 gebildeten Rauchgase 19a gelangen durch den Rauchgasausgang 16a in den Wärmetauscher 2, wo sie die in einem Mantel 5 angeordneten Rohre 6 durchströmen, die von der Wärmetauschflüssigkeit 17 umspült werden. In der gezeigten Ausführungsform ist der Wärmetauschflüssigkeitskreislauf mit dem Heizkreislauf 15 der Heizungsanlage kombiniert.

Die unter den Kondensationspunkt abgekühlten Rauchgase 19b gelangen durch den Rauchgasausgang 2a in den Rohrsturzen 7 und von dort in den Neutralisator 3, wo auch das Kondensat 20 gesammelt wird, das anschließend durch das Fallrohr 8 in die Neutralisatorpatrone 9 abfließen kann. Das neutralisierte Kondensat 18 wird in einem Behälter 10 aufgefangen, von wo es durch ein Ablaufrohr 11 dem Kanalisationssystem zugeführt wird.

Der Wärmetauscher 2 besteht zweckmäßigerweise aus einem geraden Außenmantelrohr 5, in dem mehrere gerade Glasrohre 6 parallel zur Längsachse des Außenmantels angeordnet sind, durch welche das Rauchgas geführt ist, während diese Glasrohre 6 von einer Wärmetauschflüssigkeit 17 umspült werden.

Als Wärmetauschflüssigkeit 17 (Kühlmedium) wird Wasser verwendet, aber auch jede andere geeignete Flüssigkeit kann eingesetzt werden. Vorzugsweise ist der Wärmetauscher 2 mit seinen Kühlwasserein- und -ausgängen in den Heizwasser-Rücklauf der Heizanlage eingebaut. Dadurch entfällt auch die Notwendigkeit einer Pumpe für den Umlauf der Wärmtauscherflüssigkeit 17.

Der Wärmtauscher 2 entzieht den vom Heizkessel 16 ausströmenden, noch heißen Abgasen durch Abkühlung unter den Kondensationspunkt weitere Wärmeenergie. Diese Energie kann zum Vorwärmen des Heizwassers verwendet werden.

Das hierbei anfallende Kondensat 20 wird einem Neutralisator 3 zugeführt.

Die Vorteile sind:

- Energieeinsparung bis zu 17 % durch Ausnutzung der Abgasverluste und Kondensationswärme der Abgase, in Abhängigkeit vom Wirkungsgrad des Heizkessels 16 und dem tatsächlichen Betriebszustand,
- Umweltfreundlichkeit:
Ausfällung der Schadstoffe im Rauchgas durch Kondensation. Die Schadstoffe (z.B. $SO_2$) liegen in konzentrierter Form im Kondensat 20 vor und belasten dadurch nicht mehr die Umwelt. Das Kondensat 20 wird in dem Neutralisator 3 auf einfache Weise neutralisiert,
- durch Verwendung von Glasbauteilen im Kondensationsbereich wird eine dauerhafte chemische Resistenz gegenüber den aggressiven Kondensaten erreicht,
- Problemloser Einbau des Wärmetauschers 2 zwischen Heizkessel 16 und Kamin 4 (horizontal/vertikal),
- keine zusätzliche Regelung des Heizkessels 16 nötig, da der Wärmetauscher 2 vorzugsweise in die Rücklaufleitung des Heizungssystems eingebaut wird.

Der Neutralisator 3 weist z.B. einen vom abgekühlten Rauchgas durchströmten Rohrstutzen 7, ein an diesem Rohrstutzen 7 angeformtes Fallrohr 8 zum Abführen des Rauchgaskondensats 20, eine in einem Behälter 10 angeordnete Neutralisatorpatrone 9, in die dieses Fallrohr 8 mündet, und ein an diesem Behälter 10 angeordnetes Auslaufrohr 11 zum Abführen der neutralisierten Kondensatflüssigkeit 18 auf. Der Neutralisator 3 arbeitet somit wie ein Syphon.

An den Rohrstutzen 7 ist der Kamin oder die Kaminauskleidung 4 angeschlossen, die aus mehreren Rohrabschnitten 12 zusammengesetzt ist.

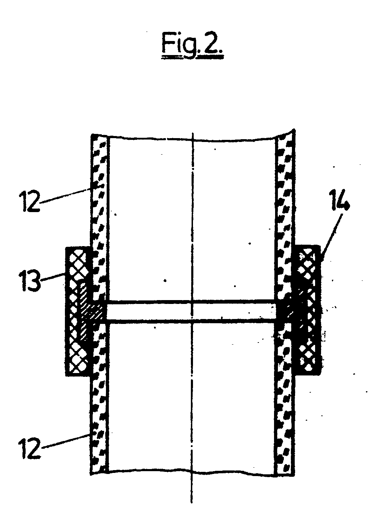

Wie in der Figur 2 zu sehen ist, werden die Rohrabschnitte 12 unter Zwischenlegen eines Dichtelements 14 mit T-förmigem Querschnitt aufeinandergesetzt und mittels einer Schelle 13 fixiert.

Gemäß einer anderen Ausführungsform kann die Abdichtung zwischen den Rohrabschnitten 12 aus einem Dichtelement aus z.B. Silikongummi bestehen, das sich wie eine Manschette um die Verbindungsstelle zwischen zwei Rohrabschnitten legt, wobei eine Dichtlippe, die vorzugsweise mit Teflon beschichtet ist, zwischen die zu verbindenden Rohrenden reicht. Die Manschette ist auf der dem Glasrohr zugewandten Seite stark aufgerauht, beispielsweise mit Rillen versehen, die für eine ausreichende Haftung des Dichtelements an der Glasrohrfläche sorgen. Eine über das Dichtelement geschobene Schelle preßt die Manschette an das Glasrohr an.

Die im Kamin 4 und im Wärmetauscher 2 anfallenden, sauren Kondensate (pH-Wert: 2,7), die je nach Betriebszustand ca. 0,7 Liter Kondensat pro Liter Heizöl betragen, werden im Neutralisator 3 gereinigt und neutralisiert, beispielsweise durch Aktivkohle und Kalksteingranulat.

Es ist in der Regel nur ein einmaliger Wechsel der Neutralisatorpatrone 9 (Kalkstein + Aktivkohle) pro Jahr notwendig, so daß nur sehr geringe Kosten für aktive Umweltschutzmaßnahmen bei Hausheizungssytemen entstehen. Die nachlassende Reinigungswirkung der Neutralisatorpatrone kann durch Farbumschlag von Indikatorpapier angezeigt werden. Es kann auch ein pH-Meter 11a dazu verwendet werden, die Funktionsfähigkeit des Neutralisators 3 ständig zu überwachen und im Bedarfsfall den Abfluß des neutralisierten Kondensats 18 in das Abwasser zu unterbrechen. Dieses pH-Meter 11a wird zweckmäßigerweise in das Auslaufrohr 11 des Neutralisators 3 eingebaut und kann z.B. derart funktionieren, daß es bei Unterschreitung eines Mindest-pH-Wertes ein elektrisches Signal erzeugt, welches ein Magnetventil 11b öffnen und schließen kann. Das Magnetventil 11b sperrt das Auslaufrohr 11 aus dem Neutralisator 3, so daß das neutralisierte Kondensat über eine höher gelegene Abflußleitung 11c in ein Sammelgefäß 11d abfließen kann. Gleichzeitig geht die Heizung auf Störung (Kontroll-Lampe 11e).

Das Abwasser hat nach der Neutralisation einen pH-Wert von 7,7 und kann nach den geltenden Abwassersatzungen der Städte und Gemeinden unbedenklich in die öffentliche Kanalisation eingeleitet werden. Der $SO_2$-Anteil im Abwasser liegt im Bereich von $10^{-3}$ %.

An den Neutralisator 3 ist der/die Kamin/Kaminauskleidung 4 angeschlossen, der/die aus einem, gegebenenfalls mehreren Rohrabschnitten 12 besteht, wobei vorzugsweise zwischen den Rohrabschnitten 12 ein säurefestes und temperaturbeständiges Dichtelement 14 mit T-förmigem Querschnitt angeordnet ist. Es können auch Bördelrand-Dichtungen, O-Ring-Dichtungen oder andere geeignete Dichtungen verwendet werden. Mittels geeigneter Schellen 13 werden diese Rohrabschnitte 12 in ihrer Lage fixiert.

Dank der dauerhaften chemischen Beständigkeit gegenüber allen beim Kondensationsbetrieb anfallenden Stoffen tritt keine Versottung des Kamins mehr auf. Das Kaminsystem ist dicht sowohl gegenüber den Abgasen als auch gegenüber den anfallenden Kondensaten.

Eine Verringerung des Kaminquerschnittes um den Faktor 0,6 infolge Rauchgasabkühlung bei Wärmetauscherbetrieb ist möglich, so daß die Kaminauskleidung auch nachträglich in bereits vorhandene Schornsteine eingebaut werden kann.

Ein weiterer Vorteil der erfindungsgemäßen Anordnung besteht darin, daß eine Isolation der Rauchgasabführung, d.h. des Kamins bzw. der Kaminauskleidung 4, überflüssig ist, da gerade der Kondensationsbetrieb erwünscht ist. Außerdem sind Reinigungsöffnungen für den Schornsteinfeger nicht mehr nötig.

Weiterhin besteht die Möglichkeit des Einbaus einer automatischen Kaminreinigung (Waschen der Glasrohrinnenflächen durch Wassersprühvorrichtung im Kaminkopf). Bei Kondensationsbetrieb bewirkt jedoch die anfallende Kondensatmenge bereits einen Selbstreinigungseffekt im Kamin.

Die vollständige Transparenz bei der Verwendung von Glasrohren ermöglicht eine dauernde Sichtkontrolle.

## Ansprüche

1. Anordnung zur Wärmerückgewinnung und zum Reinigen von Rauchgasen, zum Einbau zwischen eine Heizanlage, wie einen Öl-, Gas- oder Festbrennstoff-Heizkessel, und einem Kamin mit einer versottungsfesten Kaminauskleidung, mit einem zwischen einem Rauchgasausgang (16a) eines Heizkessels und dem Kamin angeordneten Rohrbündel-Wärmeaustauscher, der parallel zueinander verlaufende Wärmetauscherrohre (6) aus Glas aufweist, durch die das Rauchgas und entstehendes Kondensat und um die ein Kühlmittel herumgeführt wird, und einem Neutralisator zur Neutralisation des Kondensats, dadurch gekennzeichnet, daß die Wärmetauscherrohre (6) des Rohrbündel-Wärmetauschers (2) eine Ummantelung aus Stahlblech aufweisen, durch die das Kühlmittel geführt wird, daß ein Rohrstutzen (7) vorgesehen ist, der in Strömungsrichtung der Rauchgase nach dem Rohrbündel-Wärmetauscher (2) und vor dem Kamin (4) angeordnet ist, wobei die Wärmetauscherrohre (6) so angeordnet sind, daß das entstehende Kondensat zu dem Rohrstutzen (7) fließen kann, und daß ein mit dem Rohrstutzen (7) verbundenes Fallrohr (8) zur Ableitung des Kondensats in den Neutralisator (3) vorgesehen ist.

2. Anordnung nach Anspruch 1, dadurch gekennzeichnet, daß der Wärmetauscher mit seinen Kühlmittelanschlüssen in den Heizwasser-Rücklauf der Heizanlage eingebaut ist.

3. Anordnung nach Anspruch 1 oder 2, dadurch gekennzeichnet, daß der Neutralisator aus folgenden Bauteilen besteht

- einer in einem Behälter (10) angeordneten Neutralisatorpatrone (9), in die das Fallrohr mündet, und
- einem an dem Behälter angeordneten Auslaufrohr (11) zum Abführen der neutralisierten Kondensatflüssigkeit (18).

4. Anordnung nach einem der vorhergehenden Ansprüche, dadurch gekennzeichnet, daß der/die Kamin/Kaminauskleidung (4) aus einem, gegebenenfalls aus mehreren Rohrabschnitten (12) zusammengesetzten Rohr besteht, wobei zwischen den Rohrabschnitten ein säurefestes und temperaturbeständiges Dichtelement (14) mit T-förmigem Querschnitt angeordnet ist, welches zugleich eine kraftschlüssige, auf Zug beanspruchbare Verbindung darstellt.

## Claims

1. An arrangement for heat recovery and for cleaning flue gases, for installation between a heating plant, such as an oil, gas or solid-fuel heating boiler, and a chimney with a soot-proof lining, having a tube-nest heat exchanger which is arranged between a flue-gas outlet (16a) of a heating boiler and the chimney and which has heat-exchanger tubes (6) of glass which extend parallel to one another and through which the flue gas and resulting condensate are conveyed and around which a coolant is conveyed, and a neutralizer for neutralizating the condensate, **characterized in that** the heat-exchanger tubes (6) of the tube-nest heat exchanger (2) have a casing of sheet steel through which the coolant is conveyed, a tube support (7) is provided which is arranged in the flow direction of the flue gases downstream of the tube-nest heat exchanger (2) and upstream of the chimney (4), the heat-exchanger tubes (6) being arranged in such a way that the resulting condensate can flow to the tube support (7), and a downpipe (8) connected to the tube support (7) is provided for draining the condensate into the neutralizer (3).

2. An arrangement according to Claim 1, **characterized in that** the heat exchanger with its coolant connexions is fitted in the heating-water return of the heating plant.

3. An arrangement according to Claim 1 or 2, **characterized in that** the neutralizer comprises the following components:

- a neutralization cartridge (9) which is arranged in a container (10) and into which the downpipe opens, and

- an outlet tube (11) arranged on the container, for removing the neutralized condensate liquid (18).

4. An arrangement according to any one of the preceding Claims, **characterized in that** the chimney or the lining (4) thereof comprises a tube, where appropriate formed by a plurality of tube sections (12), an acid-resistant and temperature-resistant sealing element (14) with a T-shaped cross-section being arranged between the tube sections and constituting at the same time a non-positively locking connexion which can be subjected to tensile force.

**Revendications**

1. Dispositif pour la récupération de chaleur et l'épuration des gaz brûlés, destiné à être monté entre une installation de chauffage, telle qu'une chaudière de chauffage au fuel, au gaz, ou à combustible solide, et une cheminée à revêtement résistant à l'encrassement, comportant un échangeur thermique à faisceau tubulaire disposé entre une sortie de gaz brûlés (16a) d'une chaudière de chauffage et une cheminée, et qui comporte des tubes d'échangeur (6) en verre parallèles entre eux, parcourus par les gaz brûlés et le condensat formé, et autour desquels circule un fluide de refroidissement, et un dispositif de neutralisation pour la neutralisation du condensat, **caractérisé** en ce que les tubes d'échangeur (6) de l'échangeur à faisceau tubulaire (2) comportent une enveloppe en tôle d'acier, à l'intérieur de laquelle circule le fluide de refroidissement, en ce qu'il est prévu un élément de tubulure (7) qui est placé en aval de l'échangeur thermique à faisceau tubulaire (2) et en amont de la cheminée (4) dans la direction d'écoulement des gaz brûlés, les tubes d'échangeur (6) étant disposés de manière telle, que le condensat formé peut s'écouler vers l'élément de tubulure (7), et en ce qu'il est prévu un tuyau de descente (8) relié à l'élément de tubulure (7) pour l'évacuation du condensat dans le dispositif de neutralisation (3).

2. Dispositif selon la revendication 1, **caractérisé** en ce que l'échangeur thermique est intercalé par ses raccordements de liquide de refroidissement dans le circuit de retour d'eau de chauffage de l'installation de chauffage.

3. Dispositif selon la revendication 1 ou 2, **caractérisé** en ce que le dispositif de neutralisation se compose des éléments suivants

- une cartouche de neutralisation (9) placée dans une cuve (10) dans laquelle débouche le tuyau de descente, et
- un tuyau d'évacuation (11) raccordé à la cuve pour l'évacuation des condensats liquides (18) neutralisés.

4. Dispositif selon l'une des revendications précédentes, **caractérisé** en ce que la/le cheminée/revêtement de cheminée (4) se compose d'un tube éventuellement formé de plusieurs tronçons de tube (12), un élément d'étanchéité (14) de section en forme de T, en un matériau résistant aux acides et à la température, étant placé entre les tronçons de tube, et assurant simultanément une liaison par adhérence résistant à la traction.

Fig. 1

## Fig.2.

12

14

13

12